# EUROPEAN PATENT SPECIFICATION

(11) **EP 3 670 390 B1**
(45) Date of publication and mention of the grant of the patent: **07.07.2021**
(21) Application number: 19216828.4
(22) Date of filing: 17.12.2019
(51) Int. Cl.: B65G 1/04, B65G 1/06

(54) **SHUTTLE FOR TRANSPORTING PALLETS**
PALETTENTRANSPORTVORRICHTUNG
DISPOSITIF DE TRANSPORT DE PALETTES

(30) Priority: 20.12.2018 BE 201805914
(43) Date of publication of application: 24.06.2020
(73) Proprietor: STOW INTERNATIONAL N.V., 8587 Spiere-Helkijn (BE)
(72) Inventor: VANDEMERGEL, Luc, 8820 TORHOUT (BE)
(74) Representative: Cardoen, Annelies Andréa C.

(56) References cited:
- EP-A2- 3 053 855
- WO-A1-2005/077789
- WO-A1-2007/007354
- WO-A1-2014/195867

## Description

The present invention relates to a shuttle for transporting pallets in a shelving structure, wherein the shuttle is displaceable along a first direction and along a second direction which is virtually at right angles to the first direction, wherein the first and the second direction are intended to extend virtually horizontally during use, wherein the shuttle comprises a frame, first wheels which are arranged so as to be rotatable about first rotation axles which extend through the centre of the respective first wheels and virtually along the second direction in order to move the shuttle along the first direction, and second wheels which are arranged so as to be rotatable about second rotation axles which extend through the centre of the respective second wheels and virtually along the first direction in order to move the shuttle along the second direction, wherein the shuttle comprises a displacement device for upwardly and downwardly displacing the first wheels during use of the shuttle, so that the first wheels are displaceable between at least a first position in which the shuttle is configured to be supported on the first wheels and is displaceable along the first direction, and a second position in which the shuttle is configured to be supported on the second wheels and is displaceable along the second direction, wherein the shuttle comprises one or several support elements which together form at least one supporting surface for supporting pallets, these one or several support elements being connected to the frame in such a way that the supporting surface extends on the top side of the frame
Similar Shuttles can be found for example in document EP 3 053 855 A2, WO 2005/077789 A1, WO 2014/195867 Alar WO 2007/007354 A1.

Many companies already use a shelving structure or 'storage racks' for storing goods by means of pallets. In order to optimize the storage space, shelving structures comprising several storeys are used, with every storey comprising at least one main lane which extends virtually horizontally and along the first direction, and several side lanes which extend virtually horizontally and along the second direction. By means of shuttles which are able to move along the first direction and along the second direction and which can thus travel both on a said main lane and on the side lanes, pallets are placed at the desired location in the shelving structure and also removed therefrom. These shuttles may be referred to by the term '2D shuttles'. The drawback of these existing shuttles is that their construction is relatively complicated. Thus, the wheels are often each driven separately by means of drive axles, as a result of which complicated synchronizing systems are required to ensure that the wheels move synchronously. The first wheels also have to be upwardly and downwardly displaceable. The one or several support elements, which comprise, for example, one table, are also upwardly and downwardly displaceable. In practice, this means that such shuttles comprise many motors and many other components in order to be able to move the shuttle in the shelving structure and to allow the one or several support elements to perform the desired upward and downward displacement.

It is therefore an object of the invention to produce a shuttle which is able to displace pallets in a shelving structure, this shuttle being considerably simpler and more compact than the existing shuttles
According to the invention, this object is achieved by a shuttle with the characteristics of claim 1.

In particular, this object is achieved by providing a shuttle as described in the first paragraph of this description, wherein the one or several support elements are upwardly and downwardly displaceable with respect to the frame between a lowest position, in which the distance between the supporting surface and the frame is minimal and the one or several support elements rest on the frame, and a highest position, in which the distance between the supporting surface and the frame is maximal, wherein the upward and downward displacement of the one or several support elements is coupled to the upward and downward displacement of the first wheels.

By means of these support elements, it is in this case readily possible to lift a pallet which rests on the shelving structure, so that the pallet rests on the shuttle. The shuttle is thus able to displace pallets. These one or several support elements may comprise, for example, one upwardly and downwardly displaceable table.

Here, the first wheels are upwardly and downwardly displaceable with respect to the frame. The one or several support elements also have to be configured to be upwardly and downwardly displaceable. By coupling the in this case upward and downward displacement of the one or several support elements, i.e. of the supporting surface, to the upward and downward displacement of the first wheels, it is thus not necessary to provide an additional device in order to upwardly and downwardly displace the one or several support elements. As a result thereof, the shuttle can be designed to be less complicated and more compact. Thus, for example, it may be configured such that, during the upward displacement of the first wheels, these first wheels will make contact with the one or several support elements and will thus push these one or several support elements upwards, i.e. away from the frame, so that the supporting surface can extend at a distance from the frame. It is also possible to provide support parts which are connected to the first wheels in such a manner that these support parts are also subject to a similar displacement as the first wheels when these first wheels are upwardly and downwardly displaced, so that these support parts will also be moved upwards when the first wheels are displaced upwards and make contact with the one or several support elements and will thus push these one or several support elements upwards. In order to prevent damage to the first wheels or said support parts when making contact with the one or several support elements and when pushing the one or several support elements upwards, the first wheels or these support parts are preferably arranged so as to be freely rotatable and are thus not impeded during the upward displacement by the displacement device. This desired rotation may also be actively controlled by a drive device in order thus to keep the resistance as low as possible and prevent an undesired displacement of the shuttle. These said support parts may comprise, for example, freely rotating camwheels which extend next to the first wheels and are rotatable about the same axle as the respective first wheels.

The shuttle is configured to transport pallets in a shelving structure. This shelving structure preferably comprises several storeys, with each storey comprising at least one main lane which extends virtually horizontally and along the first direction, and several side lanes which extend virtually horizontally and along a second direction and which are linked to the at least one main lane. In order to be able to move the shuttle from the main lane to the side lanes and vice versa, every storey preferably comprises crossings for every side lane, these crossings extending at the location of the main lane. When the first wheels of the shuttle are in the first position, the shuttle is able to travel on the main lane along the first direction. If it is then desired to move the shuttle to a said side lane, the shuttle is made to travel to the respective crossing on the main lane, the first wheels are displaced upwardly by means of the displacement device until the first wheels are in a higher position, for example said second position of the first wheels, so that the second wheels come to rest on the crossing. The shuttle is now displaceable along the second direction and can thus travel to the side lane.

Preferably, the shuttle comprises carrier elements by means of which the respective first wheels are connected so as to be rotatable about the respective first rotation axles, and each carrier element is arranged so as to be rotatable about a carrier element axle which extends at a distance from and virtually parallel to the respective first rotation axle, and the displacement device is configured to bring about a rotation of the carrier elements about their respective carrier element axles in order thus to upwardly and downwardly displace the first wheels between at least said positions of the first wheels. It is for example possible to provide one carrier element for each first wheel. However, one carrier element may also carry two mutually opposite first wheels, if the respective first rotation axles are similar. This is possible since the shuttle normally comprises first wheels which extend on either side of the shuttle. If there is a said carrier element for each first wheel, by means of which the first wheel is connected so as to be rotatable about its first rotation axle, said carrier element axle of this carrier element extends at a distance from this last-mentioned first rotation axle. Each carrier element then carries one first wheel and each first rotation axle of each first wheel occupies a fixed position with respect to the carrier element by means of which the first wheel is connected. This may be regarded as a displacement device which is configured to upwardly and downwardly displace the first wheels, because the first and the second direction are intended to extend virtually horizontally. Here, the first wheels are upwardly and downwardly displaceable with respect to the respective carrier element axles. Here, the upward and downward displacement of the first wheels can be performed very easily by rotating the carrier elements about their respective carrier element axles. Rotating the carrier elements requires only little space and can be carried out using simple systems, such as linear systems comprising spindles with trapezium thread with a spindle nut or comprising linear motors or... In this case, only the carrier elements are made to rotate and therefore it is not necessary to upwardly and downwardly displace the entire drive device of the first wheels, which facilitates the construction of this shuttle. It is possible, for example, to provide a drive device comprising a motor, in which this motor can remain stationary with respect to the carrier element axles. For example, when the shuttle comprises a frame, the drive device may comprise a motor which occupies a fixed position with respect to the frame and the carrier elements may be connected to the frame so as to be rotatable about their respective carrier element axles, in which case these carrier element axles occupy a fixed position with respect to the frame. If the second wheels are also connected to the frame so as to be rotatable about their respective second rotation axles and these second rotation axles occupy a fixed position with respect to the frame, the carrier element axles may be provided at a different height than the second rotation axles, so that a first drive device for the first wheels can be provided and a second drive device for the second wheels can be provided, with the different components of the first and the second drive device not touching each other. Thus, it is for example possible to provide a physical drive axle for the first wheels and a physical drive axle for the second wheels, with these drive axles extending in the frame at different heights.

Preferably, all first wheels have virtually identical dimensions and all first rotation axles extend in the same plane, this plane being configured to extend virtually horizontally. Preferably, all second wheels have virtually identical dimensions and all second rotation axles extend in the same plane, this plane being configured to extend virtually horizontally.

In a highly preferred embodiment, in their highest position, the one or several support elements rest on the first wheels. Here, the one or several support elements preferably rest directly on the first wheels in the highest position of the one or several support elements. In this case, the upward and downward displacement of the first wheels is coupled to the displacement of the supporting surface in a very simple manner. In order to displace the one or several support elements upwardly and downwardly, no additional elements or no additional device has to be provided. There is thus no need to provide additional support parts whose upward and downward movement is coupled to the upward and downward displacement of the first wheels. As a result thereof, the shuttle can be constructed in a very compact and uncomplicated manner. There is thus no need to provide support parts which are, for example, connected to said carrier elements in a fixed position, are connected to the axles of the first wheels and undergo, for example, the same rotation and upward and downward displacement as the first wheels, or are rotatably connected to said carrier elements, etc. During the upward displacement of the first wheels, the first wheels will in this case make contact with the one or several support elements and push these upwards, away from the frame so that the supporting surface may extend at a distance from the frame. In order to prevent damage to the first wheels while making contact with the one or several support elements and while pushing the one or several support elements upwards, the first wheels are preferably arranged freely rotatable about their rotation axles and thus they are not inhibited during the upward displacement by the displacement device. The desired rotation of the first wheels about their first rotation axles may also be actively controlled by the drive device in order thus to keep the resistance between the first wheels and the one or several support elements as low as possible and prevent unintended displacement of the shuttle.

In an alternative embodiment, in which the shuttle comprises said carrier elements, in their highest position, the one or several support elements rest on support parts which are connected to respective carrier elements. These support parts may be connected to these carrier elements in a fixed position or in a rotatable manner. Thus, the support parts may be cam rollers which are connected to the carrier element so as to be rotatable about axles which extend parallel to the carrier element axle or the support parts may be levers with cam rollers.

In another alternative embodiment, in their highest position, the one or several support elements rest on support parts which are arranged so as to be rotatable about the respective first rotation axles.

Preferably, the first wheels are displaceable by means of the displacement device between at least three positions, being a lowest position, in which the first wheels are in their lowest position with respect to the frame, being an intermediate position in which the first wheels are in a higher position with respect to the frame, and a highest position, in which the first wheels are in their highest position with respect to the frame, and the shuttle is settable to at least three positions, being a first position, in which the one or several support elements are in their lowest position and the first wheels are in their lowest position, a second position, in which the first wheels are in their intermediate position and a third position, in which the one support elements are in their highest position and the first wheels are in their highest position. The lowest position of the first wheels preferably corresponds to said first position of the first wheels. In the case of the second position, when the first wheels are in their intermediate position, the one or several support elements are preferably in their lowest position. However, the one or several support elements may also already rest on the first wheels or on the said support parts, but may not yet be in their highest position. When this shuttle is used to displace pallets in a shelving structure, the shelving structure comprising the abovementioned main lanes and side lanes, it is normally only necessary to displace pallets in said side lanes and pallets are only stored in said side lanes. The at least one main lane is only used to move the shuttle into the desired side lane. In a said side lane, the shuttle has to be able to move under the pallets which rest on the side lane and the shuttle also has to be able to lift these pallets, to displace them along the second direction and to put them down on the side lane. The one or several support elements thus have to be able to take up both their highest position and a lower position, when the shuttle is displaceable along the second direction and thus rests on the second wheels. This is possible by providing said 3 positions, as there are two positions in which the shuttle rests on the second wheels and is thus displaceable along the second direction, namely the second and the third position. Since, in their second position, the one or several support elements are not in their highest position, the shuttle may move under pallets which rest on the side lane. By then bringing the first wheels to their highest position and thus bringing the one or several support elements to their highest position, pallets which rest on the side lane can be lifted up and can thus be displaced along the second direction. By bringing the first wheels from their highest position to their intermediate position and thus bringing the one or several support elements to a lower position, it is possible to place pallets which previously rested on the supporting surface on the side lane and thus to make them rest on the side lane.

In a preferred embodiment, said carrier elements are connected to the frame so as to be rotatable about said respective carrier element axles and the carrier element axles occupy a fixed position with respect to the frame. Since the first wheels are rotated about these carrier element axles during the upward and downward displacement by the displacement device, the distance of the first rotation axles to the respective carrier element axles is always constant. As a result thereof, it is possible to provide a first drive device for the first wheels, of which first drive device components occupy a fixed position with respect to the frame. It is for example possible to provide a physical drive axle which extends along a said carrier element axle and is arranged so as to be able to rotate about this carrier element axle. The rotation of this drive axle can easily be transferred to the first wheels, as the first rotation axles always extend at the same distance from the respective carrier element axles.

Furthermore preferably, the first wheels, in their first position, at least partly extend under the frame and under the second wheels and the first wheels, in their second position, are in a higher position with respect to the frame than in their first position and the second wheels extend at least partly under the first wheels. In the first position, the shuttle is readily able to rest on the first wheels and in the second position the shuttle is readily able to rest on the second wheels.

Also furthermore preferably, the second wheels are connected to the frame so as to be rotatable about the respective second rotation axles and the second rotation axles occupy a fixed position with respect to the frame. Here, the second wheels are not upwardly and downwardly displaceable with respect to the frame, as a result of which the connection between the second wheels and the frame may be simple and the drive mechanism of these second wheels may be of an uncomplicated construction. Preferably, the second rotation axles extend in the same plane which is configured to extend virtually horizontally and the carrier element axles extend in the same plane which is configured to extend virtually horizontally, said planes extending above one another. In this way, the first wheels and the second wheels can each be driven by at least one physical drive axle, with the physical drive axle for the second wheels extending over or under the physical drive axle of the first wheels. As a result thereof, the shuttle can be made in a compact and uncomplicated manner.

In a preferred embodiment, in which the shuttle comprises said carrier elements, the shuttle comprises a first drive device for rotating the first wheels about their respective first rotation axles, this first drive device comprising at least one physical drive axle which extends virtually along a said carrier element axle and is arranged so as to be rotatable about this carrier element axle, with the first drive device comprising one or several transferring elements for transferring the rotation of the drive axle to the respective first wheel, so that a rotation of the drive axle brings about a rotation of the respective first wheel about its first rotation axle. The physical drive axle extends along a said carrier element axle. When the shuttle comprises a frame, the carrier element axles preferably occupy a fixed position with respect to the frame. Here, the physical drive axle does not have to be provided so as to be upwardly and downwardly displaceable in the frame and, for example, the motor which is provided to rotate this drive axle may also occupy a fixed position in the frame. By means of the transferring elements, which may comprise, for example, gear wheels, it is possible to simply transfer the rotation of the drive axle to the respective first wheels, as the first rotation axles always extend at the same distance with respect to the respective carrier element axles. One physical drive axle may be present which, for example, directly drives two first wheels. It is also possible for there to be several physical drive axles. In this case, it is not necessary to drive all first wheels, since the non-driven first wheels will automatically co-rotate when the shuttle moves along the first direction, upon contact with a surface.

Furthermore preferably, the one or several transferring elements are connected to the respective carrier element. The transferring elements are then subject to the same movement as the carrier element when the displacement device moves the first wheels upwards or downwards. The transferring elements may, for example, comprise gear wheels which are connected so as to be rotatable about central axles which extend parallel to the respective carrier element axle.

Preferably, the one or several support elements comprise a table, the table substantially forming said supporting surface.

In a preferred embodiment, in which the shuttle comprises said carrier elements, the first wheels are configured to be displaced on rails and the shuttle comprises positioning elements for positioning the shuttle with respect to the rails along the second direction, these positioning elements being connected to the respective carrier elements at a distance from the respective carrier element axles. The first wheels are then preferably configured to travel on the top side of the rails, while the positioning elements make contact with upright sides of the rails, so that the position of the shuttle, viewed along the second direction, remains virtually unchanged during the displacement along the first direction. The positioning elements are able to readily perform their function if they extend entirely or extend at least largely under the first wheels in the lowest position of the latter. However, these positioning elements must not inhibit the displacement of the shuttle along the second direction, when the shuttle rests on the second wheels and moves along the second direction. In the case of the existing shuttles, the positioning elements will to this end be pulled up if the shuttle does not rest on the first wheels and these positioning elements will be lowered again when the shuttle rests on the first wheels. This again involves additional components in order to render the pulling up and lowering of the positioning elements possible. By in this case connecting the positioning elements to the carrier elements at a distance from the respective carrier element axles, the positioning elements will also be upwardly and downwardly displaced when the first wheels are upwardly and downwardly displaced by the displacement device. There is thus no need in this case to provide additional components in order to be able to pull up and lower the positioning elements. The positioning elements are preferably positioning wheels which are arranged so as to be rotatable about an axle which extends virtually vertically during use, when the first wheels are in their lowest position. Positioning wheels are not very susceptible to wear, as they rotate against the rails.

Furthermore preferably, in the lowest position of the first wheels, the positioning elements extend under the first wheels and the distance between a said positioning element and the carrier element axle of the carrier element by means of which the positioning element is connected, is preferably greater than the corresponding distance between the respective first rotation axle and the carrier element axle. In this way, the positioning elements can easily be brought to a position in which the positioning elements extend under the first wheels.

In a specific embodiment, in which the shuttle comprises said carrier elements, the displacement device comprises a motor for causing a rotation along the first direction and displacement elements which, on the one hand, are connected to the motor and, on the other hand, are connected to the respective carrier elements, for converting said rotation into a linear displacement along the first direction and thus rotating the carrier elements about the carrier element axles. Thus, the displacement elements may, for example, comprise spindles which are arranged so as to be rotatable about rotation axles which extend along the first direction and spindle nuts which are connected to the respective carrier elements for converting the rotation of the spindles into a rotation of the carrier elements about the carrier element axles. Preferably, the shuttle only comprises one said motor which drives these spindles. By means of spindles and spindle nuts, it is readily possible to convert a rotation about an axle along the first direction into a linear movement along this first direction in order thus to rotate a respective carrier element about its carrier element axle. In addition, the spindles and spindle nuts may take up a limited volume, so that the shuttle can also be of compact construction. The trapezoidal thread of the spindles is also self-braking, as a result of which it is possible to achieve a stable state of the various positions of the first wheels. In an embodiment in which the shuttle comprises 4 of said first wheels, with two first wheels at the location of the one side of the shuttle and two first wheels at the location of the other side of the shuttle, the displacement device preferably has two spindles with partly left-hand and right-hand screw thread, one for every abovementioned side of the shuttle, which is configured to move the first wheels up and down at the location of the respective side. Then, the shuttle comprises two spindle nuts per spindle.

Furthermore preferably, the position of at least one of the displacement elements is adjustable. Thus, for example, the position of the spindles is adjustable if the displacement elements comprise spindles and spindle nuts. By then bringing at least one of the displacement elements in the desired position, it is readily possible to ensure that the undersides of the first wheels virtually always extend in the same plane, irrespective of the position in which the first wheels are. The position of the spindles is for example adjustable along the first direction, as a result of which the carrier elements are tiltable until the undersides of the first wheels virtually extend in one plane. In this way, it is readily possible to calibrate the first wheels.

In a preferred embodiment, the shuttle comprises a second drive device for rotating the second wheels about their respective second rotation axles, this second drive device comprising at least one physical drive axle which virtually extends along the first direction. Preferably, all second wheels are driven by a physical drive axle and there is more than one physical drive axle. Normally, the shuttle will move along the second direction if it is in a said side lane of a shelving structure. Preferably, all second wheels are driven, because this allows for a good transition between the main lane and a said side lane and vice versa. The shuttle preferably also comprises a first drive device for rotating the first wheels. This first and this second drive device then preferably each comprise one motor. The displacement device preferably also comprises one motor. In this case, three motors suffice, in principle, in order to produce an operational shuttle. Here, the shuttle may comprise one control system which controls and actuates these three motors.

Furthermore preferably, the first wheels comprise two sets of first wheels, with the one set extending on one side of the shuttle and the other set extending on a side of the shuttle situated opposite this side, wherein a said drive axle of the first drive direction is configured to drive first wheels of both sets simultaneously, and that the second wheels comprise two sets of second wheels, with the one set extending on one side of the shuttle extends and the other set extending on a side of the shuttle situated opposite this last-mentioned side, wherein a said drive axle of the second drive direction is configured to drive second wheels of both sets simultaneously and wherein said drive axle of the first drive device extends under said drive axle of the second drive device or vice versa. Due to the fact that a said drive axle in this case drives wheels of both sets simultaneously, the need for synchronisation between the movement of the wheels is reduced, as a result of which it is possible to satisfactorily drive the wheels in a better and simple manner. The at least one drive axle of the first drive device is always at a different height than the at least one drive axle of the second drive device, so that they do not impede one another and so that these drive axles can extend virtually completely between two mutually oppositely extending sides of the shuttle. If the shuttle comprises a frame, a said drive axle of the second drive device can be rotatably connected to the frame at a fixed location in the frame and if the carrier element axles extend in a fixed position with respect to the frame, it is readily possible to ensure that the carrier element axles extend at a different height with respect to the frame than a said drive axle of the second drive device.

Preferably, the shuttle comprises 8 second wheels and 4 first wheels. By means of 8 second wheels, the shuttle is able to move in a shelving structure from said main lane to a said side lane and vice versa. As there are only 4 first wheels, only 4 first wheels have to be upwardly and downwardly displaced by means of the displacement device. Preferably, the shuttle is bar-shaped and the shuttle has two pairs of mutually opposite lateral surfaces. The second wheels then extend at the location of the one said pair of mutually opposite lateral surfaces, with 4 second wheels on the one lateral surface and 4 second wheels on the other lateral surface, and the first wheels then extend at the location of the other said pair of mutually opposite lateral surfaces, with two first wheels on the one lateral surface and two first wheels on the other lateral surface.

Preferably, the first wheels are always arranged so as to be freely rotatable about their respective first rotation axles. During the transition from a higher position of the first wheels to the lowest position of the wheels, the first wheels make contact with a surface, for example a said main lane of a shelving structure. By arranging the first wheels such that they are freely rotatable, the resistance between the first wheels and this surface is small, when the first wheels make contact with the surface, as a result of which the risk of wear of the first wheels is small. In order to prevent wear of the first wheels even further, the first drive device which drives the first wheels may start to rotate the first wheels during the upward and downward displacement of the first wheels. This also assists in preventing the shuttle from displacing along the first direction in an undesired manner. To this end, the shuttle may be provided with a control system which drives the first drive device as a function of the movement executed by the displacement device.

In a highly preferred embodiment, the shuttle comprises a first drive device for rotating the first wheels about their respective first rotation axles, and the shuttle comprises a control system for actuating this first drive device, this control system being configured to bring about a desired rotation of the first wheels about their respective first rotation axles during an upward and/or downward movement of the first wheels produced by the displacement device. This control system then preferably also drives the displacement device and the second drive device for the second wheels, if applicable. By using such a control system, it is possible to tune the various movements of the elements of the shuttle to each other, so that the shuttle always performs the desired displacement and/or has the desired position.

In a preferred embodiment, in which the shuttle comprises said carrier elements, the shuttle comprises motors for at least rotating the first wheels, the second wheels and the carrier elements, and the shuttle comprises at least one battery for supplying energy to these motors and the shuttle comprises a plug-in system connected to the frame for charging the battery, this plug-in system extending at the location of the underside of the frame. Due to the fact that the first wheels are upwardly and downwardly displaceable, it is also possible to displace the frame vertically by upwardly and downwardly displacing the first wheels. By then providing a plug-in system at the location of the underside of the frame, it is possible to displace the frame downwards in the direction of a charging system for the battery and then plug it into the charging system by means of the plug-in system. In this case, it is thus possible to charge the battery without any human intervention. Preferably, if the shuttle is used in a shelving system with at least one said main lane and side lanes, the charging system is situated at the location of the main lane and a shuttle which is located on the main lane is driven to the charging system. Thereafter, the first wheels are moved from the lowest position to a higher position, so that the frame drops and plugs into the charging system by means of its plug-in system.

The present invention will now be explained in more detail by means of the following detailed description of preferred embodiments of a shuttle according to the present invention. The sole aim of this description is to give illustrative examples and to indicate further advantages and particulars, and can therefore by no means be interpreted as a limitation of the area of application of the invention or of the patent rights defined in the claims. In this detailed description, reference numerals are used to refer to the attached drawings, in which:
- ***Fig. 1*** shows a perspective view of a shuttle according to the invention;
- ***Fig. 2*** shows a representation of Fig. 1, in which the table of the shuttle is not illustrated, so that the various components of the shuttle which are situated under the table are visible;
- ***Fig. 3*** shows a detail view of Fig. 2;
- ***Fig. 4*** shows another detail view of Fig. 2;
- ***Fig. 5*** shows a diagrammatic view of the shuttle illustrated in Fig. 1 and a shelving structure in which the shuttle is situated in a first position;
- ***Fig. 6*** shows a diagrammatic view of the shuttle illustrated in Fig. 1, a shelving structure and a pallet, in which the shuttle is situated in a second position;
- ***Fig. 7*** shows a diagrammatic view of the shuttle illustrated in Fig. 1, a shelving structure and a pallet, in which the shuttle is situated in a third position;
- ***Fig. 8*** shows a representation of Fig. 1, in which only the first wheels, the second wheels and components of the first and the second drive device of these first wheels and second wheels, respectively, are illustrated;
- ***Fig. 9*** shows a diagrammatic detail view of a first alternative embodiment of a shuttle according to the invention, a shelving structure and a pallet, in which the shuttle, from the top down, is situated in a first position, an intermediate position and a third position;
- ***Fig. 10*** shows a diagrammatic detail view of a second alternative embodiment of a shuttle according to the invention, a shelving structure and a pallet, in which the shuttle, from the top down, is situated in a first position, an intermediate position and a third position;
- ***Fig. 11*** shows a diagrammatic detail view of a third alternative embodiment of a shuttle according to the invention, a shelving structure and a pallet, in which the shuttle, from the top down, is situated in a first position, an intermediate position and a third position.

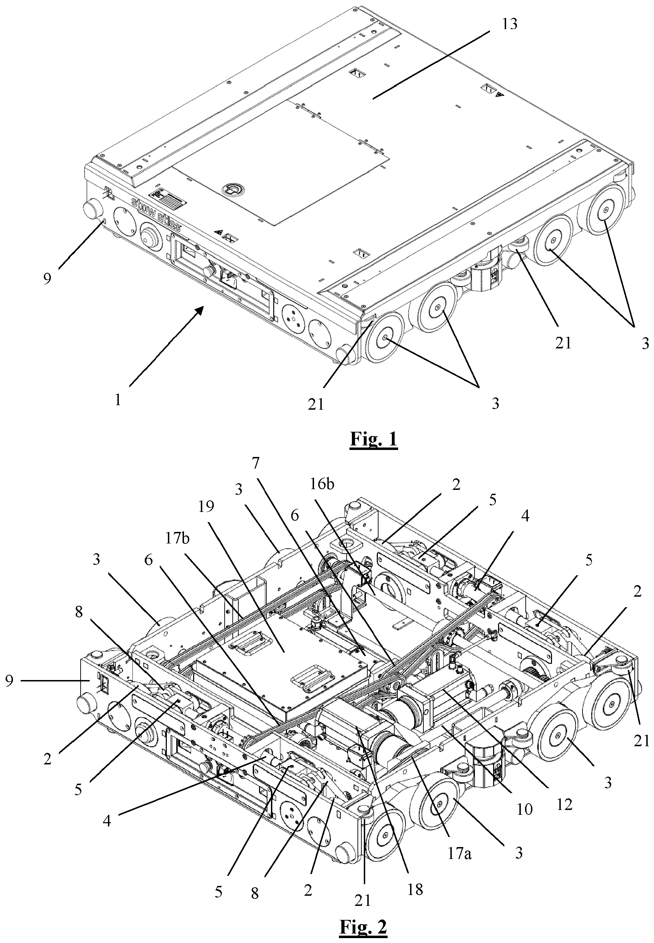

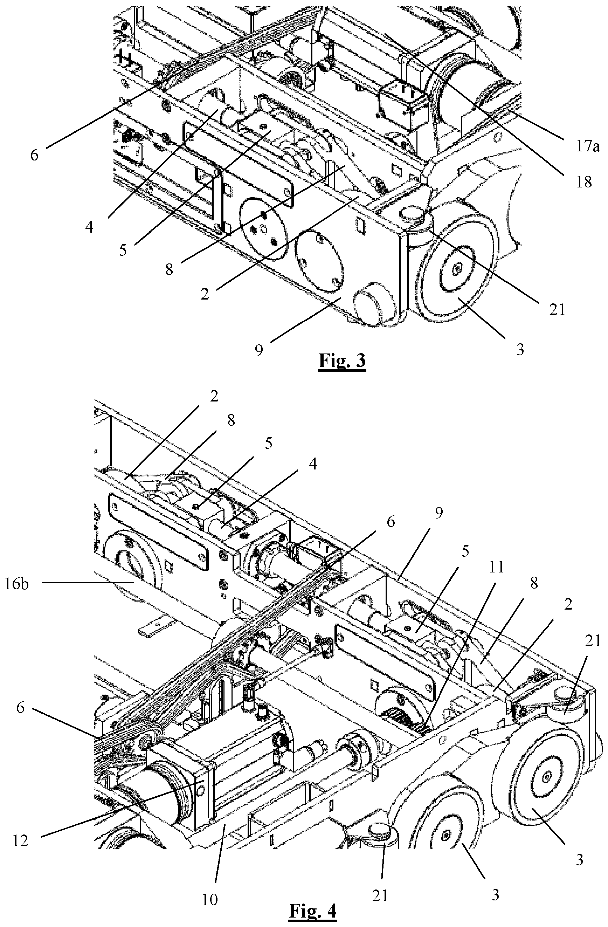

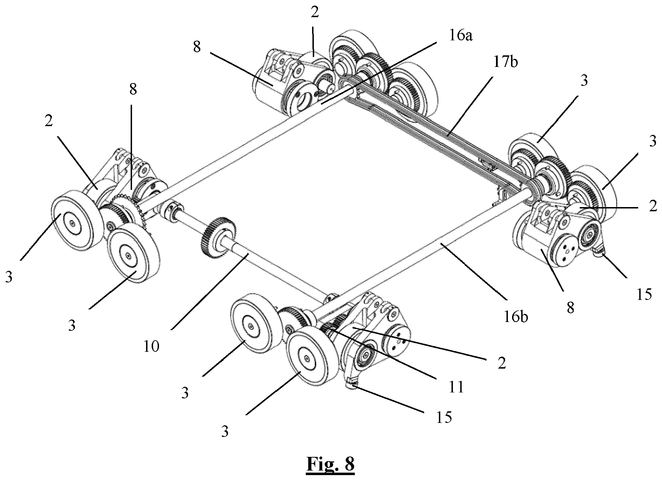

In Figs. 1 to 8, one embodiment of a shuttle (1) according to the invention is illustrated. The shuttle (1) is used for displacing pallets (23) in a shelving structure. This shelving structure preferably comprises several storeys with every storey comprising a main lane which extends along a first direction, and several side lanes which virtually join onto the main lane and extend along a second direction which is at right angles to the first direction. The first and the second direction extend virtually horizontally. The main lane comprises two rails (14) and each side lane also comprises two rails (22).

This shuttle (1) inter alia comprises the following components: a frame (9), a table (13), first wheels (2), second wheels (3), a first drive device (10, 11, 12) for the first wheels (2), a second drive device (16a, 16b, 17a, 17b, 18) for the second wheels (3), a displacement device (4, 5, 6, 7) for upwardly and downwardly displacing the first wheels (2) with respect to the frame (9), positioning wheels (15, 21), carrier elements (8) for the first wheels (2), a battery (19) for supplying energy to the first drive device (10, 11, 12), the second drive device (16a, 16b, 17a, 17b, 18) and the displacement device (4, 5, 6, 7) and a control system for controlling and driving the first drive device (10, 11, 12), the second drive device (16a, 16b, 17a, 17b, 18) and the displacement device (4, 5, 6, 7).

The first wheels (2) are arranged so as to be rotatable about first rotation axles which extend through the centre of the respective first wheels (2) and extend virtually along the second direction in order to move the shuttle (1) along the first direction, and the second wheels (3) are arranged so as to be rotatable about second rotation axles which extend through the centre of the respective second wheels (3) and extend virtually along the first direction in order to move the shuttle (1) along the second direction.

The shuttle (1) comprises a displacement device (4, 5, 6, 7) for upwardly and downwardly displacing the first wheels (2), so that the first wheels (2) are displaceable between at least a lowest position in which the shuttle (1) is configured to rest on the first wheels (2) and to be displaceable along the first direction, and a higher position in which the shuttle (1) is configured to rest on the second wheels (3) and to be displaceable along the second direction. In order to be able to move the shuttle (1) from the main lane to a said side lane or vice versa, the shelving structure comprises, at the location of the main lane, a crossing for each side lane. At the location of the crossing, it is possible to displace the first wheels (2) between the lowest position and a said higher position or vice versa by means of the displacement device (4, 5, 6, 7), so that it is possible to select on which wheels (2, 3), being the first wheels (2) or the second wheels (3), the shuttle (1) rests and thereby to select on which lane, being the main lane or a said side lane, the shuttle (1) will move.

The shuttle (1) comprises a frame (9) in which the other components of the shuttle (1) are arranged and/or by means of which the other components of the shuttle (1) are connected. The frame (9) is configured to extend virtually horizontally and has a top side, an underside, two mutually opposite first sides which are configured to extend along the first direction and two mutually opposite second sides which are configured to extend along the second direction.

The shuttle (1) comprises 8 second wheels (3), four of which are rotatably connected to the one second side of the frame (9) and another four of which are rotatably connected to the other second side of the frame (9). They are connected so as to be rotatable about their respective second rotation axles and these second rotation axles occupy a fixed position with respect to the frame (9).

The first wheels (2) are each connected to a said carrier element (8) so as to be rotatable about their respective first rotation axles. These first rotation axles occupy a fixed position with respect to their respective carrier element (8). Each carrier element (8) is connected to the frame (9) so as to be rotatable about a carrier element axle (20) which extends at a distance from and parallel to the first rotation axle of the first wheel (2) which carries the carrier element (8). The carrier element axles (20) occupy fixed positions with respect to the frame (9). The shuttle (1) comprises 4 first wheels (2), two first wheels (2) of which extend at the location of the one first side of the frame (9) and two other first wheels (2) of which extend at the location of the other side of the frame (9).

The carrier elements (8) are arranged so as to be rotatable about their said carrier element axles (20). Since the first rotation axles extend at a distance from their respective carrier element axles (20) and since the first rotation axles and the carrier element axles (20) all extend along the second direction, a rotation of each carrier element (8) results in an upward or downward movement of the first wheels (2) with respect to the frame (9) and thus it is possible to select, by means of the carrier elements (8), whether the shuttle (1) should rest on the first or on the second wheels (2, 3).

Rotation of the carrier elements (8) is brought about by means of the displacement device (4, 5, 6, 7). To this end, this displacement device (4, 5, 6, 7) comprises a motor (7), the operation of which is actuable by the control system, drive chains (6), spindles (4) which extend along the first direction and spindle nuts (5) for each carrier element (8). The operation is as follows: the motor (7) rotates chain wheels about an axle which extends along the first direction. These chain wheels are connected to the spindles (4) via the drive chains (6), so that a rotation of the chain wheels brings about a rotation of the spindles (4) about an axle which extends along the first direction. As a result thereof, the spindle nuts (5) will be displaced linearly along the first direction. At a distance from the respective carrier element axle (20), each of the spindle nuts (5) is connected to a carrier element (8), so that a linear movement of the spindle nut (5) along the first direction brings about a rotation of the carrier element (8) about its carrier element axle (20) and thus an upward or downward movement of the first wheels (2).

The first drive device (10, 11, 12) comprises a motor (12), the operation of which is actuable by the control system, a drive chain which is driven by the motor (12), a physical drive axle (10) which is driven by the drive chain, and transferring elements (11), being chain wheels, which transfer the rotation of the physical drive axle (10). As is visible in Fig. 2, the physical drive axle (10) extends between two carrier elements (8) of two first wheels (2) which extend mutually opposite each other. The last-mentioned carrier elements (8) have the same carrier element axle (20) and the physical drive axle (10) extends along this carrier element axle (20). The transferring elements (11) are connected to the respective carrier elements (8) in order thus to transfer the rotation of the physical drive axle (10) to the last-mentioned first wheels (2). Here, only two first wheels (2) are driven.

The second drive device (16a, 16b, 17a, 17b, 18) comprises a motor (18), the operation of which is actuable by the control system, drive chains (17a, 17b) and physical drive axles (16a, 16b), in which case every drive axle (16a, 16b) drives four second wheels (3). The second wheels (3) always perform the same rotation, as a result of which no synchronisation is required. The drive axles (16a, 16b) of the second drive device (16a, 16b, 17a, 17b, 18) are situated over the drive axle (10) of the first drive device (10, 11, 12).

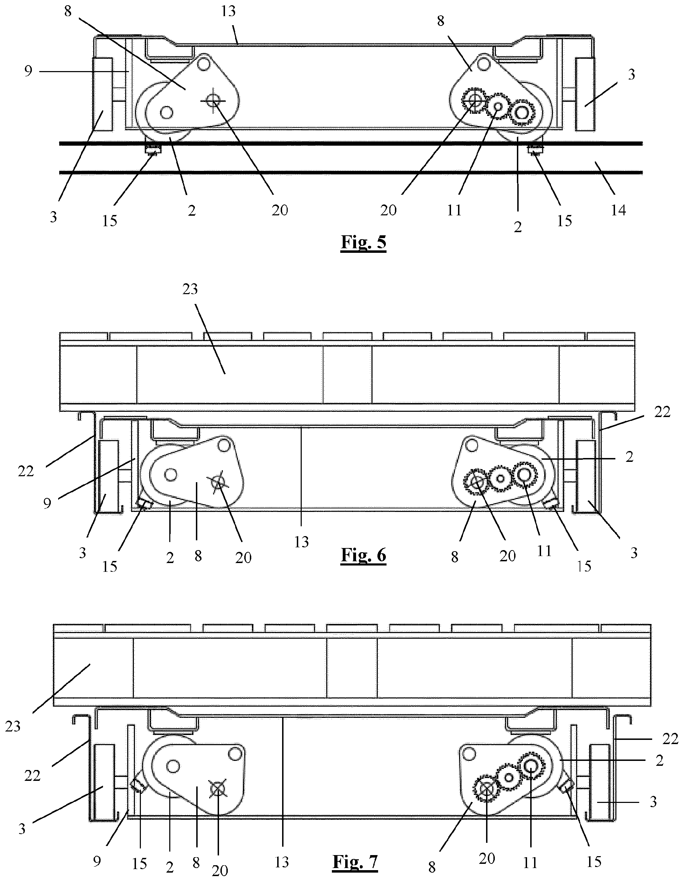

The table (13) is connected to the frame (9) so as to be displaceable along the height direction. The table (13) comprises two supporting surfaces on which pallets (23) can rest. The table (13) can assume different positions with respect to the frame (9), in which case the maximum distance between the supporting surfaces and the frame (9), viewed along the height direction, differs. In the lowest position with respect to the frame (9), the table (13) rests on the frame (9). This is visible in Figs. 5 and 6. In the highest position of the table (13), the table (13) rests on the first wheels (2). This is visible in Fig. 7. This is made possible by the fact that the first wheels (2) are displaceable with respect to the frame (9), viewed along the height direction.

In this case, the shuttle (1) is configured to assume three positions of use which are illustrated in Figs. 5 to 7, respectively. In the first position of use, the shuttle (1) is configured to move on the main lane of a shelving structure according to the first direction. In Fig. 5, a rail (14) of the main lane is visible, with two first wheels (2) resting on this rail (14). The first wheels (2) are situated in their lowest position and partly under the underside of the frame (9) and partly under the second wheels (3), as a result of which the first wheels (2) of the shuttle (1) rest on said rail (14). The table (13) rests on the frame (9) and is situated in its lowest position. In the second position of use, illustrated in Fig. 6, the shuttle (1) is configured to move along the second direction on a said side lane of a shelving structure and the table (13) is configured not to make any contact with pallets (23) which rest on this side lane, so that the shuttle (1) can move under the pallets (23). To this end, the first wheels (2) are in a higher position with respect to the frame (9), but not in their highest position yet, so that the table (13) still rests on the frame (9) and is thus in its lowest position. The second wheels (3) rest on the rails (22) of the side lane. In the third position of use, illustrated in Fig. 7, the shuttle (1) is configured to move along the second direction on a said side lane of a shelving structure and a pallet (23) can rest on the table (13), so that the shuttle (1) can move pallets (23). To this end, the first wheels (2) are in their highest position with respect to the frame (9), as a result of which the table (13) rests on the first wheels (2) and is in its highest position. The second wheels (3) rest on the rails (22) of the side lane. The movement of the table (13) is actuated in this case by means of the displacement device (4, 5, 6, 7).

Since the main lane and a said side lane each comprise two rails (14, 22), positioning wheels (15, 21) are also used. The positioning wheels (21) which help to make the desired displacement of the shuttle (1) along the second direction possible are directly rotatably connected to the frame (9). The positioning wheels (15) for the shuttle (1) which make the desired displacement of the shuttle (1) along the first direction possible are connected to the carrier elements (8) at a distance from the respective carrier element axles (20) which is greater than the corresponding distance between the connection of the respective first wheels (2) and the carrier element (8).

Furthermore, the first wheels (2) are freely arranged so as to be rotatable, so that there is no excessive resistance between the table (13)/the rails (14) and the first wheels (2) and the first wheels (2) will not start to wear too quickly during contact with the table (13) or the rails (14) of the main lane during the upward or downward movement of the first wheels (2). These first wheels (2) may also be driven actively during the upward or downward movement of the first wheels (2) in order to prevent undesired displacement of the shuttle (1).

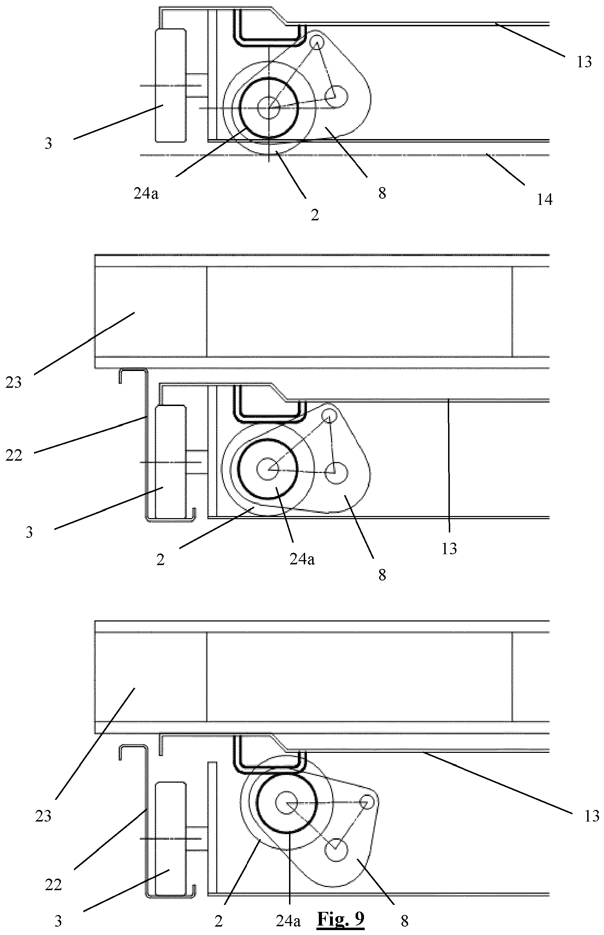

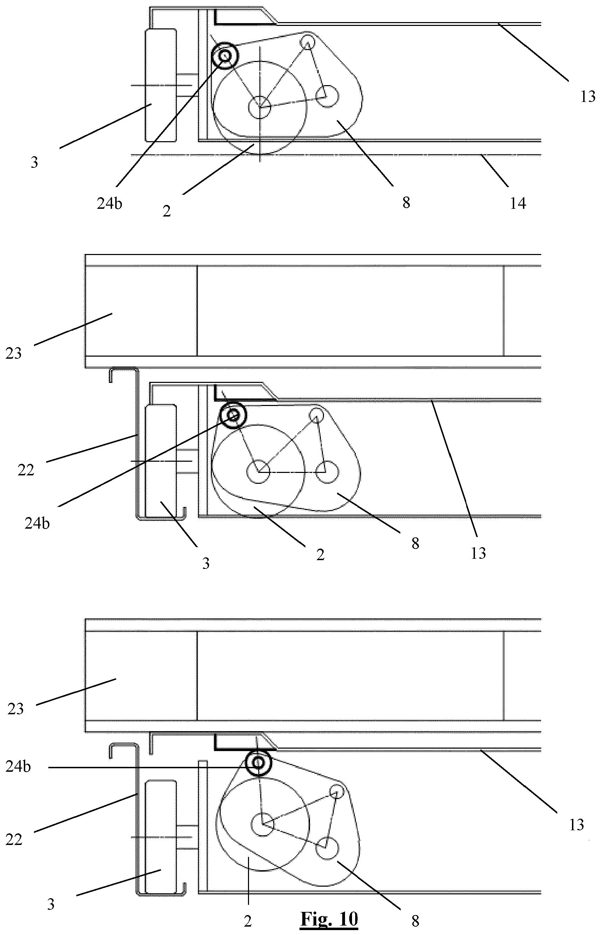

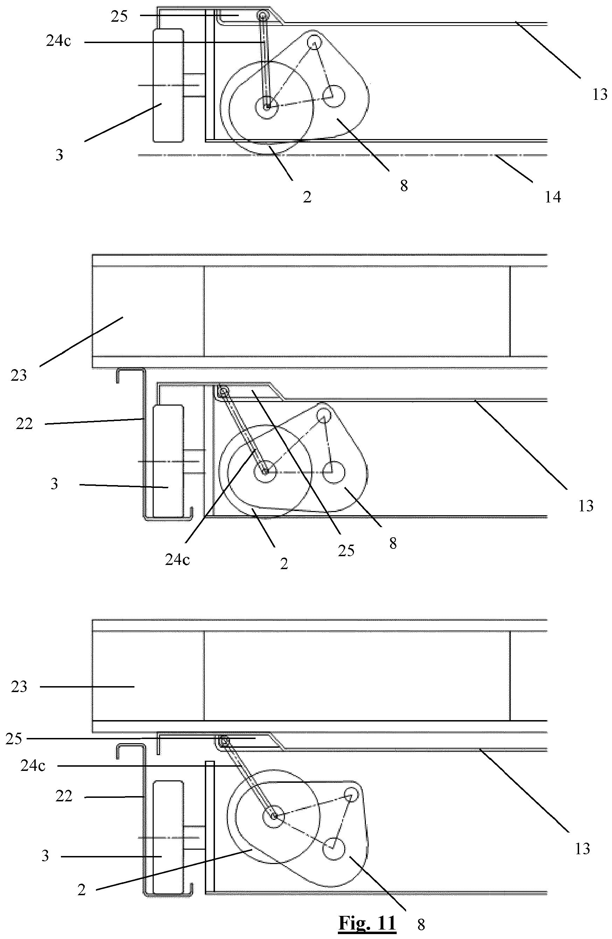

The alternative embodiments of the shuttles (1) illustrated in Figs. 9 to 11 are similar to those of the abovementioned shuttle (1), but with the difference that the table (13) does not rest on the first wheels (2) in the third position of the shuttle (1), but that the table (13) is configured to rest on and to be pushed upwards by additional support parts (24a, 24b, 24c). These support parts (24a, 24b, 24c) are respective freely rotating cam wheels (24a) which are arranged so as to be rotatable about the respective axles of the first wheels (2), cam wheels (24b) which are connected to the carrier elements (8), levers with cam rollers (24c) which are connected to the respective axles of the first wheels (2) and which are guided in cavities (25) in the table (13).

## Claims

1. Shuttle (1) for transporting pallets (23) in a shelving structure, wherein the shuttle (1) is displaceable along a first direction and along a second direction which is virtually at right angles to the first direction, wherein the first and the second direction are intended to extend virtually horizontally during use, wherein the shuttle (1) comprises a frame (9), first wheels (2) which are arranged so as to be rotatable about first rotation axles which extend through the centre of the respective first wheels (2) and virtually along the second direction in order to move the shuttle (1) along the first direction, and second wheels (3) which are arranged so as to be rotatable about second rotation axles which extend through the centre of the respective second wheels (3) and virtually along the first direction in order to move the shuttle (1) along the second direction, wherein the shuttle (1) comprises a displacement device (4, 5, 6, 7) for upwardly and downwardly displacing the first wheels (2) during use of the shuttle (1), so that the first wheels (2) are displaceable between at least a first position in which the shuttle (1) is configured to be supported on the first wheels (2) and is displaceable along the first direction, and a second position in which the shuttle (1) is configured to be supported on the second wheels (3) and is displaceable along the second direction, wherein the shuttle (1) comprises one or several support elements (13) which together form at least one supporting surface for supporting pallets (23), these one or several support elements (13) being connected to the frame (9) in such a way that the supporting surface extends on the top side of the frame (9), **characterized in that** the one or several support elements (13) are upwardly and downwardly displaceable with respect to the frame (9) between a lowest position, in which the distance between the supporting surface and the frame (9) is minimal and the one or several support elements (13) rest on the frame (9), and a highest position, in which the distance between the supporting surface and the frame (9) is maximal, wherein the upward and downward displacement of the one or several support elements (13) is coupled to the upward and downward displacement of the first wheels (2).

2. Shuttle according to Claim 1, **characterized in that** the shuttle (1) comprises carrier elements (8) by means of which the respective first wheels (2) are connected so as to be rotatable about the respective first rotation axles, and **in that** each carrier element (8) is arranged so as to be rotatable about a carrier element axle (20) which extends at a distance from and virtually parallel to the respective first rotation axle, and the displacement device (4, 5, 6 7) is configured to bring about a rotation of the carrier elements (8) about their respective carrier element axles (20) in order thus to upwardly and downwardly displace the first wheels (2) between at least said positions of the first wheels (2).

3. Shuttle (1) according to Claim 1 or 2, **characterized in that**, in the highest position of the one or several support elements (13), the one or several support elements rest (13) on the first wheels (2).

4. Shuttle (1) according to Claim 2, **characterized in that**, in the highest position of the one or several support elements (13), the one or several support elements (13) rest on support parts (24b) which are connected to respective carrier elements (8).

5. Shuttle (1) according to Claim 1 or 2, **characterized in that**, in the highest position of the one or several support elements (13), the one or several support elements (13) rest on support parts (24a, 24c) which are arranged so as to be rotatable about the respective first rotation axles.

6. Shuttle (1) according to one of the preceding claims, **characterized in that** the first wheels (2) are displaceable by means of the displacement device (4, 5, 6, 7) between at least three positions, being a lowest position, in which the first wheels (2) are in their lowest position with respect to the frame (9), being an intermediate position in which the first wheels (2) are in a higher position with respect to the frame (9), and a highest position, in which the first wheels (2) are in their highest position with respect to the frame (9), and **in that** the shuttle (1) is settable to at least three positions, being a first position, in which the one or several support elements (13) are in their lowest position and the first wheels (2) are in their lowest position, a second position, in which the first wheels (2) are in their intermediate position and a third position, in which the one or several support elements (13) are in their highest position and in which the first wheels (2) are in their highest position.

7. Shuttle (1) according to Claim 2 or according to Claim 2 and one or several of Claims 3 to 6, **characterized in that** the carrier elements (8) are connected to the frame (9) so as to be rotatable about said respective carrier element axles (20), and **in that** the carrier element axles (20) occupy a fixed position with respect to the frame (9).

8. Shuttle (1) according to Claim 2 or according to Claim 2 and one or several of Claims 3 to 7, **characterized in that** the shuttle (1) comprises a first drive device (10, 11, 12) for rotating the first wheels (2) about their respective first rotation axles, this first drive device (2) comprising at least one physical drive axle (10) which extends virtually along a said carrier element axle (20) and is arranged so as to be rotatable about this carrier element axle (20), with the first drive device (10, 11, 12) comprising one or several transferring elements (11) for transferring the rotation of the drive axle (10) to the respective first wheel (2), so that a rotation of the drive axle (10) brings about a rotation of the respective first wheel (2) about its first rotation axle.

9. Shuttle (1) according to Claim 2 or according to Claim 2 and one or several of Claims 3 to 8, **characterized in that** the first wheels (2) are configured to be displaced on rails (14), and **in that** the shuttle (1) comprises positioning elements (15) for positioning the shuttle (1) with respect to the rails (14) along the second direction, these positioning elements (15) being connected to the respective carrier elements (8) at a distance from the respective carrier element axles (20).

10. Shuttle (1) according to Claim 2 or according to Claim 2 and one or several of Claims 3 to 9, **characterized in that** the displacement device (4, 5, 6, 7) comprises a motor (7) for causing a rotation along the first direction and displacement elements (4, 5) which, on the one hand, are connected to the motor (7) and, on the other hand, are connected to the respective carrier elements (8), for converting said rotation into a linear displacement along the first direction and thus rotating the carrier elements (8) about the carrier element axles (20).

11. Shuttle (1) according to one of the preceding claims, **characterized in that** the shuttle (1) comprises a second drive device (16a, 16b, 17a, 17b, 18) for rotating the second wheels (3) about their respective second rotation axles, this second drive device (16a, 16b, 17a, 17b, 18) comprising at least one physical drive axle (16a, 16b) which virtually extends along the first direction.

12. Shuttle (1) according to Claims 8 and 11, **characterized in that** the first wheels (2) comprise two sets of first wheels (2), with the one set extending on one side of the shuttle (1) and the other set extending on a side of the shuttle (1) situated opposite this side, wherein a said drive axle (10) of the first drive direction (10, 11, 12) is configured to drive first wheels (2) of both sets simultaneously, and **in that** the second wheels (3) comprise two sets of second wheels (3), with the one set extending on one side of the shuttle (1) and the other set extending on a side of the shuttle (1) situated opposite this last-mentioned side, wherein each said drive axle (16a, 16b) of the second drive direction (15a, 16b, 17a, 17b, 18) is configured to drive second wheels (3) of both sets simultaneously and wherein said drive axle (10) of the first drive device (10, 11, 12) extends under said drive axle (16a, 16b) of the second drive device (16a, 16b, 17a, 17b, 18) or vice versa.

13. Shuttle (1) according to one of the preceding claims, **characterized in that** the first wheels (2) are always arranged so as to be freely rotatable about their respective first rotation axles.

14. Shuttle (1) according to one of the preceding claims, **characterized in that** the shuttle (1) comprises a first drive device (10, 11, 12) for rotating the first wheels (2) about their respective first rotation axles, and the shuttle (1) comprises a control system for actuating this first drive device (10, 11, 12), this control system being configured to bring about a desired rotation of the first wheels (2) about their respective first rotation axles during an upward and/or downward movement of the first wheels (2) produced by the displacement device (4, 5, 6, 7).

15. Shuttle (1) according to Claim 2 or according to Claim 2 and one or several of Claims 3 to 14, **characterized in that** the shuttle (1) comprises motors (7, 12, 18) for at least rotating the first wheels (2), the second wheels (3) and the carrier elements (8), wherein the shuttle (1) comprises at least one battery (19) for supplying energy to these motors (7, 12, 18) and wherein the shuttle (1) comprises a plug-in system connected to the frame (9) for charging the battery (19), this plug-in system extending at the location of the underside of the frame (9).

## Patentansprüche

1. Vorrichtung (1) zum Transportieren von Paletten (23) in einer Regalstruktur, wobei die Vorrichtung (1) entlang einer ersten Richtung und entlang einer zweiten Richtung, die praktisch in rechten Winkeln zur ersten Richtung ist, versetzbar ist, wobei die erste und die zweite Richtung dazu gedacht sind, sich während der Verwendung praktisch horizontal zu erstrecken, wobei die Vorrichtung (1) einen Rahmen (9), erste Räder (2), die dazu angeordnet sind, drehbar um erste Drehachsen zu sein, die sich durch die Mitte der entsprechenden ersten Räder (2) und praktisch entlang der zweiten Richtung erstrecken, um die Vorrichtung (1) entlang der ersten Richtung zu bewegen, und zweite Räder (3), die dazu angeordnet sind, drehbar um zweite Drehachsen zu sein, die sich durch die Mitte der entsprechenden zweiten Räder (3) und praktisch entlang der ersten Richtung erstrecken, um die Vorrichtung (1) entlang der zweiten Richtung zu bewegen, umfasst, wobei die Vorrichtung (1) eine Versetzungsvorrichtung (4, 5, 6, 7) zum Versetzen der ersten Räder (2) nach oben und unten während der Verwendung der Vorrichtung (1) umfasst, sodass die ersten Räder (2) zwischen zumindest einer ersten Position, in der die Vorrichtung (1) dazu ausgelegt ist, auf den ersten Rädern (2) gestützt zu werden und entlang der ersten Richtung versetzbar ist, und einer zweiten Position, in der die Vorrichtung (1) dazu ausgelegt ist, auf den zweiten Rädern (3) gestützt zu werden und entlang der zweiten Richtung versetzbar ist, versetzbar sind, wobei die Vorrichtung (1) ein oder mehrere Stützelemente (13) umfasst, die zusammen zumindest eine Stützoberfläche zum Stützen von Paletten (23) bilden, wobei diese eine oder diese mehreren Stützelemente (13) mit dem Rahmen (9) in einer Weise verbunden sind, dass sich die Stützoberfläche auf der Oberseite des Rahmens (9) erstreckt, **dadurch gekennzeichnet, dass** das eine oder die mehreren Stützelemente (13) nach oben und unten bezüglich des Rahmens (9) zwischen einer niedrigsten Position, in der der Abstand zwischen der Stützoberfläche und dem Rahmen (9) minimal ist und das eine oder die mehreren Stützelemente (13) auf dem Rahmen (9) ruhen, und einer höchsten Position, in der der Abstand zwischen der Stützoberfläche und dem Rahmen (9) maximal ist, versetzbar sind, wobei die Versetzung des einen oder der mehreren Stützelemente (13) nach oben und unten mit der Versetzung der ersten Räder (2) nach oben und unten gekoppelt ist.

2. Vorrichtung nach Anspruch 1, **dadurch gekennzeichnet, dass** die Vorrichtung (1) Trägerelemente (8) umfasst, mit deren Hilfe die entsprechenden ersten Räder (2) verbunden sind, um drehbar um die entsprechenden ersten Drehachsen zu sein, und dadurch, dass jedes Trägerelement (8) angeordnet ist, um drehbar um eine Trägerelementachse (20) zu sein, die sich bei einem Abstand von der und praktisch parallel zu der entsprechenden ersten Drehachse erstreckt, und wobei die Versetzungsvorrichtung (4, 5, 6, 7) dazu ausgelegt ist, eine Drehung der Trägerelemente (8) um ihre entsprechenden Trägerelementachsen (20) herbeizuführen, um so die ersten Räder (2) nach oben und unten zwischen zumindest den Positionen der ersten Räder (2) zu versetzen.

3. Vorrichtung (1) nach Anspruch 1 oder 2, **dadurch gekennzeichnet, dass**, in der höchsten Position des einen oder der mehreren Stützelemente (13), das eine oder die mehreren Stützelemente (13) auf den ersten Rädern (2) ruhen.

4. Vorrichtung (1) nach Anspruch 2, **dadurch gekennzeichnet, dass**, in der höchsten Position des einen oder der mehreren Stützelemente (13), das eine oder die mehreren Stützelemente (13) auf den Stützteilen (24b) ruhen, die mit den entsprechenden Trägerelementen (8) verbunden sind.

5. Vorrichtung (1) nach Anspruch 1 oder 2, **dadurch gekennzeichnet, dass**, in der höchsten Position des einen oder der mehreren Stützelemente (13), das eine oder die mehreren Stützelemente (13) auf den Stützteilen (24a, 24c) ruhen, die angeordnet sind, um drehbar um die entsprechenden ersten Drehachsen zu sein.

6. Vorrichtung (1) nach einem der vorhergehenden Ansprüche, **dadurch gekennzeichnet, dass** die ersten Räder (2) mithilfe der Versetzungsvorrichtung (4, 5, 6, 7) zwischen mindestens drei Positionen, einer niedrigsten Position, in der die ersten Räder (2) in ihrer niedrigsten Position bezüglich des Rahmens (9) sind, einer Zwischenposition, in der die ersten Räder (2) in einer höheren Position bezüglich des Rahmens (9) sind, und einer höchsten Position, in der die ersten Räder (2) in ihrer höchsten Position bezüglich des Rahmens (9) sind, versetzbar sind, und dadurch, dass die Vorrichtung (1) auf mindestens drei Positionen, eine erste Position, in der das eine oder die mehreren Stützelemente (13) in ihrer niedrigsten Position sind und die ersten Räder (2) in ihrer niedrigsten Position sind, eine zweite Position, in der die ersten Räder (2) in ihrer Zwischenposition sind, und eine dritte Position, in der das eine oder die mehreren Stützelemente (13) in ihrer höchsten Position sind und in der die ersten Räder (2) in ihrer höchsten Position sind, einstellbar ist.

7. Vorrichtung (1) nach Anspruch 2 oder nach Anspruch 2 und einem oder mehreren der Ansprüche 3 bis 6, **dadurch gekennzeichnet, dass** die Trägerelemente (8) mit dem Rahmen (9) verbunden sind, um drehbar um die entsprechenden Trägerelementachsen (20) zu sein, und dadurch, dass die Trägerelementachsen (20) eine feste Position bezüglich des Rahmens (9) belegen.

8. Vorrichtung (1) nach Anspruch 2 oder nach Anspruch 2 und einem oder mehreren der Ansprüche 3 bis 7, **dadurch gekennzeichnet, dass** die Vorrichtung (1) eine erste Antriebsvorrichtung (10, 11, 12) zum Drehen der ersten Räder (2) um ihre entsprechenden ersten Drehachsen umfasst, wobei die erste Antriebsvorrichtung (2) zumindest eine physische Antriebsachse (10) umfasst, die sich praktisch entlang der Trägerelementachse (20) erstreckt und angeordnet ist, um drehbar um diese Trägerelementachse (20) zu sein, wobei die erste Antriebsvorrichtung (10, 11, 12) ein oder mehrere Übertragungselemente (11) zum Übertragen der Drehung der Antriebsachse (10) auf das entsprechende erste Rad (2) umfasst, sodass eine Drehung der Antriebsachse (10) eine Drehung des entsprechenden ersten Rades (2) um seine erste Drehachse herbeiführt.

9. Vorrichtung (1) nach Anspruch 2 oder nach Anspruch 2 und einem oder mehreren der Ansprüche 3 bis 8, **dadurch gekennzeichnet**, das die ersten Räder (2) dazu ausgelegt sind, auf Schienen (14) versetzt zu werden, und dadurch, dass die Vorrichtung (1) Positionierungselemente (15) zum Positionieren der Vorrichtung (1) bezüglich der Schienen (14) entlang der zweiten Richtung umfasst, wobei diese Positionierungselemente (15) mit den entsprechenden Trägerelementen (8) bei einem Abstand von den entsprechenden Trägerelementachsen (20) verbunden sind.

10. Vorrichtung (1) nach Anspruch 2 oder nach Anspruch 2 und einem oder mehreren der Ansprüche 3 bis 9, **dadurch gekennzeichnet, dass** die Versetzungsvorrichtung (4, 5, 6, 7) einen Motor (7), um eine Drehung entlang der ersten Richtung zu veranlassen, und Versetzungselemente (4, 5), die, einerseits, mit dem Motor (7) verbunden sind und, andererseits, mit den entsprechenden Trägerelementen (8) verbunden sind, zum Umwandeln der Drehung in eine lineare Versetzung entlang der ersten Richtung und damit Drehen der Trägerelemente (8) um die Trägerelementachsen (20) umfasst.

11. Vorrichtung (1) nach einem der vorhergehenden Ansprüche, **dadurch gekennzeichnet, dass** die Vorrichtung (1) eine zweite Antriebsvorrichtung (16a, 16b, 17a, 17b, 18) zum Drehen der zweiten Räder (3) um ihre entsprechenden zweiten Drehachsen umfasst, wobei diese zweite Antriebsvorrichtung (16a, 16b, 17a, 17b, 18) zumindest eine physische Antriebsachse (16a, 16b) umfasst, die sich praktisch entlang der ersten Richtung erstreckt.

12. Vorrichtung (1) nach Ansprüchen 8 und 11, **dadurch gekennzeichnet, dass** die ersten Räder (2) zwei Sätze von ersten Rädern (2) umfassen, wobei sich der eine Satz an einer Seite der Vorrichtung (1) erstreckt und der andere Satz an einer Seite der Vorrichtung (1) erstreckt, die dieser Seite gegenüberliegt, wobei die Antriebsachse (10) der ersten Antriebsrichtung (10, 11, 12) dazu ausgelegt ist, erste Räder (2) von beiden Sätzen gleichzeitig anzutreiben, und dadurch, dass die zweiten Räder (3) zwei Sätze von zweiten Rädern (3) umfassen, wobei sich der eine Satz an einer Seite der Vorrichtung (1) erstreckt und der andere Satz an einer Seite der Vorrichtung (1) erstreckt, die dieser zuletzt erwähnten Seite gegenüberliegt, wobei jede einzelne Antriebsachse (16a, 16b) der zweiten Antriebsrichtung (15a, 16b, 17a, 17b, 18) dazu ausgelegt ist, zweite Räder (3) von beiden Sätzen gleichzeitig anzutreiben, und wobei sich die Antriebsachse (10) der ersten Antriebsvorrichtung (10, 11, 12) unter der Antriebsachse (16a, 16b) der zweiten Antriebsvorrichtung (16a, 16b, 17a, 17b, 18) erstreckt oder umgekehrt.

13. Vorrichtung (1) nach einem der vorhergehenden Ansprüche, **dadurch gekennzeichnet, dass** die ersten Räder (2) immer so angeordnet sind, um frei drehbar um ihre entsprechenden ersten Drehachsen zu sein.

14. Vorrichtung (1) nach einem der vorhergehenden Ansprüche, **dadurch gekennzeichnet, dass** die Vorrichtung (1) eine erste Antriebsvorrichtung (10, 11, 12) zum Drehen der ersten Räder (2) um ihre entsprechenden ersten Drehachsen umfasst, und wobei die Vorrichtung (1) ein Steuerungssystem zum Betätigen der ersten Antriebsvorrichtung (10, 11, 12) umfasst, wobei dieses Steuerungssystem dazu ausgelegt ist, während einer Bewegung nach oben und/oder unten der ersten Räder (2), produziert durch die Versetzungsvorrichtung (4, 5, 6, 7), eine gewünschte Drehung der ersten Räder (2) um ihre entsprechenden ersten Drehachsen herbeizuführen.

15. Vorrichtung (1) nach Anspruch 2 oder nach Anspruch 2 und einem oder mehreren der Ansprüche 3 bis 14, **dadurch gekennzeichnet, dass** die Vorrichtung (1) Motoren (7, 12, 18) zumindest zum Drehen der ersten Räder (2), der zweiten Räder (3) und der Trägerelemente (8) umfasst, wobei die Vorrichtung (1) zumindest eine Batterie (19) zum Zuführen von Energie zu diesen Motoren (7, 12, 18) umfasst und wobei die Vorrichtung (1) ein mit dem Rahmen (9) verbundenes Plugin-System zum Laden der Batterie (19) umfasst, wobei sich dieses Plugin-System am Ort der Unterseite des Rahmens (9) erstreckt.

## Revendications

1. Navette (1) pour transporter des palettes (23) dans une structure de rayonnage, dans laquelle la navette (1) est déplaçable le long d'une première direction et le long d'une seconde direction qui est virtuellement à angle droit par rapport à la première direction, dans laquelle la première et la seconde directions sont prévues pour s'étendre virtuellement horizontalement durant l'utilisation, dans laquelle la navette (1) comprend un cadre (9), des premières roues (2) qui sont agencées afin d'être rotatives autour de premier axes de rotation qui s'étendent à travers le centre des premières roues respectives (2) et virtuellement le long de la seconde direction afin de mettre en mouvement la navette (1) le long de la première direction, et des secondes roues (3) qui sont agencées afin d'être rotatives autour de seconds axes de rotation qui s'étendent à travers le centre des secondes roues respectives (3) et virtuellement le long de la première direction afin de mettre en mouvement la navette (1) le long de la seconde direction, dans laquelle la navette (1) comprend un dispositif de déplacement (4, 5, 6, 7) pour déplacer vers le haut et vers le bas les premières roues (2) durant l'utilisation de la navette (1), pour que les premières roues (2) soient déplaçables entre au moins une première position, dans laquelle la navette (1) est configurée pour être supportée sur les premières roues (2) et est déplaçable le long de la première direction, et une deuxième position, dans laquelle la navette (1) est configurée pour être supportée sur les secondes roues (3) et est déplaçable le long de la seconde direction, dans laquelle la navette (1) comprend un ou plusieurs éléments de support (13) qui forment ensemble au moins une surface de support pour supporter des palettes (23), ces un ou plusieurs éléments de support (13) étant raccordés au cadre (9) de manière telle que la surface de support s'étende sur le côté supérieur du cadre (9), **caractérisée en ce que** les un ou plusieurs éléments de support (13) sont déplaçables vers le haut et vers le bas par rapport au cadre (9) entre une position la plus basse, dans laquelle la distance entre la surface de support et le cadre (9) est minimale et les un ou plusieurs éléments de support (13) reposent sur le cadre (9), et une position la plus haute, dans laquelle la distance entre la surface de support et le cadre (9) est maximale, dans laquelle le déplacement vers le haut et vers le bas des un ou plusieurs éléments de support (13) est couplé au déplacement vers le haut et vers le bas des premières roues (2).

2. Navette selon la revendication 1, **caractérisée en ce que** la navette (1) comprend des éléments porteurs (8) au moyen desquels les premières roues respectives (2) sont raccordées afin d'être rotatives autour des premiers axes de rotation respectifs, et **en ce que** chaque élément porteur (8) est agencé afin d'être rotatif autour d'un axe d'élément porteur (20) qui s'étend à une distance du, et virtuellement parallèle au, premier axe de rotation respectif, et le dispositif de déplacement (4, 5, 6, 7) est configuré pour entraîner une rotation des éléments porteurs (8) autour de leurs axes d'élément porteur respectifs (20) afin ainsi de déplacer vers le haut et vers le bas les premières roues (2) entre au moins lesdites positions des premières roues (2).

3. Navette (1) selon la revendication 1 ou 2, **caractérisée en ce que**, dans la position la plus haute des un ou plusieurs éléments de support (13), les un ou plusieurs éléments de support (13) reposent sur les premières roues (2).

4. Navette (1) selon la revendication 2, **caractérisée en ce que**, dans la position la plus haute des un ou plusieurs éléments de support (13), les un ou plusieurs éléments de support (13) reposent sur des parties de support (24b) qui sont raccordées à des éléments porteurs respectifs (8).

5. Navette (1) selon la revendication 1 ou 2, **caractérisée en ce que**, dans la position la plus haute des un ou plusieurs éléments de support (13), les un ou plusieurs éléments de support (13) reposent sur des parties de support (24a, 24c) qui sont agencées afin d'être rotatives autour des premiers axes de rotation respectifs.

6. Navette (1) selon l'une des revendications précédentes, **caractérisée en ce que** les premières roues (2) sont déplaçables au moyen du dispositif de déplacement (4, 5, 6, 7) entre au moins trois positions, à savoir une position la plus basse, dans laquelle les premières roues (2) sont dans leur position la plus basse par rapport au cadre (9), à savoir une position intermédiaire, dans laquelle les premières roues (2) sont dans une position plus haute par rapport au cadre (9), et une position la plus haute, dans laquelle les premières roues (2) sont dans leur position la plus haute par rapport au cadre (9), et **en ce que** la navette (1) est réglable à au moins trois positions, à savoir une première position, dans laquelle les un ou plusieurs éléments de support (13) sont dans leur position la plus basse et les premières roues (2) sont dans leur position la plus basse, une deuxième position, dans laquelle les premières roues (2) sont dans leur position intermédiaire, et une troisième position, dans laquelle les un ou plusieurs éléments de support (13) sont dans leur position la plus haute et dans laquelle les premières roues (2) sont dans leur position la plus haute.

7. Navette (1) selon la revendication 2 ou selon la revendication 2 et une ou plusieurs des revendications 3 à 6, **caractérisée en ce que** les éléments porteurs (8) sont raccordés au cadre (9) afin d'être rotatifs autour desdits axes d'élément porteur respectifs (20), et **en ce que** les axes d'élément porteur (20) occupent une position fixe par rapport au cadre (9).

8. Navette (1) selon la revendication 2 ou selon la revendication 2 et une ou plusieurs des revendications 3 à 7, **caractérisée en ce que** la navette (1) comprend un premier dispositif d'entraînement (10, 11, 12) pour mettre en rotation les premières roues (2) autour de leurs premiers axes de rotation respectifs, ce premier dispositif d'entraînement (2) comprenant au moins un axe d'entraînement physique (10) qui s'étend virtuellement le long d'un dit axe d'élément porteur (20) et est agencé afin d'être rotatif autour de cet axe d'élément porteur (20), le premier dispositif d'entraînement (10, 11, 12) comprenant un ou plusieurs éléments de transfert (11) pour transférer la rotation de l'axe d'entraînement (10) à la première roue respective (2), pour qu'une rotation de l'axe d'entraînement (10) entraîne une rotation de la première roue respective (2) autour de son premier axe de rotation.

9. Navette (1) selon la revendication 2 ou selon la revendication 2 et une ou plusieurs des revendications 3 à 8, **caractérisée en ce que** les premières roues (2) sont configurées pour être déplacées sur des rails (14), et **en ce que** la navette (1) comprend des éléments de positionnement (15) pour positionner la navette (1) par rapport aux rails (14) le long de la seconde direction, ces éléments de positionnement (15) étant raccordés aux éléments porteurs respectifs (8) à une distance des axes d'élément porteur respectifs (20).

10. Navette (1) selon la revendication 2 ou selon la revendication 2 et une ou plusieurs des revendications 3 à 9, **caractérisée en ce que** le dispositif de déplacement (4, 5, 6, 7) comprend un moteur (7) pour causer une rotation le long de la première direction et des éléments de déplacement (4, 5) qui, d'une part, sont raccordés au moteur (7) et, d'autre part, sont raccordés aux éléments porteurs respectifs (8), pour convertir ladite rotation en un déplacement linéaire le long de la première direction et ainsi mettre en rotation les éléments porteurs (8) autour des axes d'élément porteur (20).

11. Navette (1) selon l'une des revendications précédentes, **caractérisée en ce que** la navette (1) comprend un second dispositif d'entraînement (16a, 16b, 17a, 17b, 18) pour mettre en rotation les secondes roues (3) autour de leurs seconds axes de rotation respectifs, ce second dispositif d'entraînement (16a, 16b, 17a, 17b, 18) comprenant au moins un axe d'entraînement physique (16a, 16b) qui s'étend virtuellement le long de la première direction.

12. Navette (1) selon les revendications 8 et 11, **caractérisée en ce que** les premières roues (2) comprennent deux ensembles de premières roues (2), l'un ensemble s'étendant sur un côté de la navette (1) et l'autre ensemble s'étendant sur un côté de la navette (1) situé de façon opposée à ce côté, dans laquelle un dit axe d'entraînement (10) de la première direction d'entraînement (10, 11, 12) est configuré pour entraîner des premières roues (2) des deux ensembles simultanément, et **en ce que** les secondes roues (3) comprennent deux ensembles de secondes roues (3), l'un ensemble s'étendant sur un côté de la navette (1) et l'autre ensemble s'étendant sur un côté de la navette (1) situé de façon opposée à ce côté mentionné en dernier, dans laquelle chaque dit axe d'entraînement (16a, 16b) de la seconde direction d'entraînement (15a, 16b, 17a, 17b, 18) est configuré pour entraîner des secondes roues (3) des deux ensembles simultanément et dans laquelle ledit axe d'entraînement (10) du premier dispositif d'entraînement (10, 11, 12) s'étend sous ledit axe d'entraînement (16a, 16b) du second dispositif d'entraînement (16a, 16b, 17a, 17b, 18) ou vice versa.

13. Navette (1) selon l'une des revendications précédentes, **caractérisée en ce que** les premières roues (2) sont toujours agencées afin d'être librement rotatives autour de leurs premiers axes de rotation respectifs.

14. Navette (1) selon l'une des revendications précédentes, **caractérisée en ce que** la navette (1) comprend un premier dispositif d'entraînement (10, 11, 12) pour mettre en rotation les premières roues (2) autour de leurs premiers axes de rotation respectifs, et la navette (1) comprend un système de commande pour actionner ce premier dispositif d'entraînement (10, 11, 12), ce système de commande étant configuré pour entraîner une rotation souhaitée des premières roues (2) autour de leurs premiers axes de rotation respectifs durant un mouvement vers le haut et/ou vers le bas des premières roues (2), produit par le dispositif de déplacement (4, 5, 6, 7).

15. Navette (1) selon la revendication 2 ou selon la revendication 2 et une ou plusieurs des revendications 3 à 14, **caractérisée en ce que** la navette (1) comprend des moteurs (7, 12, 18) pour au moins mettre en rotation les premières roues (2), les secondes roues (3) et les éléments porteurs (8), dans laquelle la navette (1) comprend au moins une batterie (19) pour fournir de l'énergie à ces moteurs (7, 12, 18) et dans laquelle la navette (1) comprend un système enfichable raccordé au cadre (9) pour charger la batterie (19), ce système enfichable s'étendant à l'emplacement du côté inférieur du cadre (9).
